# EUROPÄISCHE PATENTSCHRIFT

(11) **EP 1 042 924 B1**
(45) Veröffentlichungstag und Bekanntmachung des Hinweises auf die Patenterteilung: **26.03.2003**
(21) Anmeldenummer: 98965123.7
(22) Anmeldetag: 15.12.1998
(51) Int. Cl.: H04Q 3/00, H04M 7/00

(54) **WÄHLVERMITTLUNGSSYSTEM MIT ZUGANG ZU SEINEN RESSOURCEN DURCH DAS INTERNET**
SWITCHED CONNECTION SYSTEM WITH ACCESS TO ITS OWN RESOURCES VIA THE INTERNET
SYSTEME DE COMMUTATION DE SELECTION AUX RESSOURCES DUQUEL ON ACCEDE PAR INTERNET

(30) Priorität: 23.12.1997 DE 19757613
(43) Veröffentlichungstag der Anmeldung: 11.10.2000
(73) Patentinhaber: SIEMENS AKTIENGESELLSCHAFT, 80333 München (DE)
(72) Erfinder: BHAVSAR, Umesh, Boca Raton, FL 33433 (US)
(86) Internationale Anmeldenummer: DE9803675
(87) Internationale Veröffentlichungsnummer: WO99034614

(56) Entgegenhaltungen:
- WO-A-97/22209
- WO-A-97/35416
- LAUTENBACHER M E ET AL: "INTELLIGENT INTERNET: VALUE-ADDED SERVICES BY INTERWORKING BETWEEN NETWORK TECHNOLOGIES" ISS '97. WORLD TELECOMMUNICATIONS CONGRESS. (INTERNATIONAL SWITCHING SYMPOSIUM), GLOBAL NETWORK EVOLUTION: CONVERGENCE OR COLLISION? TORONTO, SEPT. 21 - 26, 1997, Bd. 2, 21. September 1997, Seiten 45-51, XP000704454
- SCHOEN U ET AL: "CONVERGENCE BETWEEN PUBLIC SWITCHING AND THE INTERNET" ISS '97. WORLD TELECOMMUNICATIONS CONGRESS. (INTERNATIONAL SWITCHING SYMPOSIUM), GLOBAL NETWORK EVOLUTION: CONVERGENCE OR COLLISION? TORONTO, SEPT. 21 - 26, 1997, Bd. 1, 21. September 1997, Seiten 549-560, XP000720563

## Beschreibung

Der Anmeldungsgegenstand betrifft ein Wählvermittlungssystem mit Zugang zu seinen Ressourcen durch das Internet.

Mit dem exponentiellen Wachstum des Internets und der Trend zum Internet verstärkt sich, ist es klar, daß das Internet das Netz der Netze wird. Das andere weltweite Netz, nämlich das öffentliche Telefonnetz PSTN (für: Public Switched Telephone Network) und das Internet wachsen zusammen und jedes kann von dem anderen profitieren. Besonders das Internet kann von dem PSTN-Netz profitieren, da die Intelligenz und die Ressourcen in dem PSTN-Netz umfangreich sind. Mit dieser umfangreichen Intelligenz in den Vermittlungsknoten ist das Internet nur zögerlich nachgekommen, diese in vollem Umfang auszunutzen, da die Schnittstelle zwischen dem PSTN und dem Internet nicht klar definiert ist. Selbst nach Definition einer klaren Schnittstelle ist der Aufwand in den Vermittlungsknoten zu groß, um ihn zu rechtfertigen. Dies liegt darin begründet, daß die Kosten für eine Implementierung eines Leistungsmerkmals in einem Vermittlungsknoten sehr viel größer sind, als in einem PC (Personalcomputer). Das Problem liegt darin, wie die beiden Technologien zusammengebracht werden sollen und Internetleistungsmerkmale Zugang zu der Intelligenz sowie den Ressourcen des PSTN-Netzes mit minimalem Aufwand haben sollen.

Momentan ist es sehr schwierig, die Ressourcen eines Vermittlungsknotens für Internetdienste zu nutzen. Beispiele für Ressourcen in den Vermittlungsknoten sind Rufsteuerung (Call Control), Durchschaltung (Switching), Administration von Grunddaten (Data Base), Hardwareinformationen etc. Ein Lösungsansatz beruht darauf, neue Anwendungsprogramme zu entwickeln und neue Schnittstellen in den Vermittlungsknoten zu entwickeln, die für externe Anwendungen den Zugang zu den Ressourcen in dem PSTN-Vermittlungsknoten sicherstellen. Dies ist technisch möglich, aber der damit verbundene finanzielle Aufwand ist sehr hoch.

Aus der WO 97/22209 ist ein Intelligentes Netz, das über seinen Service Control Point mit dem Internet verbunden ist, bekannt. Bei diesem System sind die Ressourcen für Dienste auf einem über das Internet zugänglichen Server abgelegt, wodurch ein weltweiter Zugriff gegeben ist.

Dem Anmeldungsgegenstand liegt die Aufgabe zugrunde, ein System anzugeben, das Internetanwendungen den Zugang zu Ressourcen des Vermittlungsknotens erlaubt. Eine weitere Aufgabe der vorliegenden Patentanmeldung ist es, aufzuzeigen, wie das Internet die Ressourcen in den PSTN-Vermittlungsknoten mit einem Minimalaufwand nutzen kann. Weiter wird gezeigt, wie einige Leistungsmerkmale, die momentan noch nicht im Internet vorhanden sind, durch den Anmeldungsgegenstand realisierbar werden. Eine weitere Aufgabe des vorliegenden Anmeldungsgegenstand ist es, aufzuzeigen, wie der bislang notwendige kostenintensive Aufwand für den Zugang des Internet zu den Ressourcen in dem Vermittlungsknoten drastisch reduziert werden kann.

Die Aufgabe wird durch die unabhängigen Patentansprüche gelöst.

Der Anmeldungsgegenstand schafft für das Internet einen Zugang zu den vorhandenen Ressourcen und der Intelligenz in dem Wählvermittlungsnetz PSTN, wobei in der Realisierung zum großen Teil ohnehin bereits vorhandene Operatorfunktionen ausgenutzt werden können und der zusätzlich zu erbringende Aufwand gering ist. Der Anmeldungsgegenstand bildet die Grundlage für Leistungsmerkmale, die eine Zusammenarbeit zwischen dem Wählvermittlungsnetz PSTN und dem Internet Netzwerk erfordern.

Weitere vorteilhafte Weiterbildungen des Anmeldungsgegenstandes sind in den abhängigen Ansprüchen wiedergegeben.

Der Anmeldungsgegenstand wird im folgenden als Ausführungsbeispiel in einem zum Verständnis erforderlichen Umfang anhand von Figuren näher erläutert. Dabei zeigen:
- Fig 1: eine prinzipielle Darstellung einer die Erfindung realisierenden Zusammenschaltung eines PSTN mit dem Internet,
- Fig 2: eine prinzipielle Darstellung einer für die Erfindung typischen Struktur, bei der eine Vermittiungseinrichtung mit einer Network Control Platform verbunden ist und
- Fig 3: eine prinzipielle Darstellung einer herkömmlichen Struktur eines Wählvermittlungsnetzes PSTN.

In den Figuren bezeichnen gleiche Bezeichnungen gleiche Elemente.

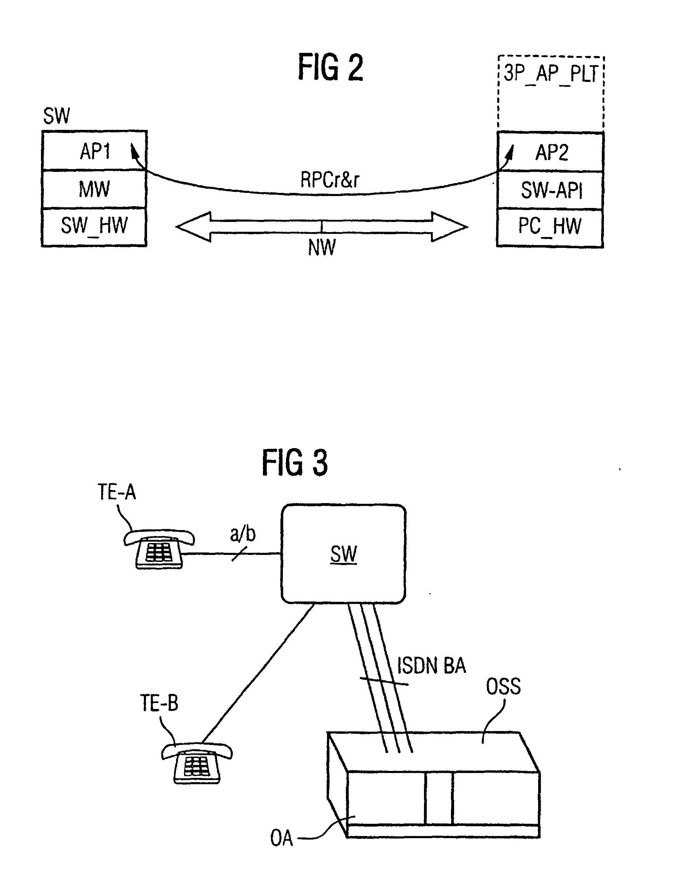

Fig 3 zeigt eine herkömmliche Vermittlungseinrichtung SW (für: switch), an die eine Teilnehmerendeinrichtung TE-A über eine Zweidraht-Anschlußleitung a/b sowie eine Teilnehmerendeinrichtung TE-B angeschlossen sind, und die über eine ISDN BA von einer Bedienerkonsole OSS (für: Operator Service System) gesteuert wird. Die Schnittstelle mag vom Typ ISDN BA(Integrated Services Digital Network Basic Access) Level 3 gegeben sein. Die Teilnehmerendeinrichtungen sind stellvertretend für alle bekannten Teilnehmerendeinrichtungen dargestellt. In der Bedienerkonsole sind Programme für Anwendungen durch den Operator OA (für: operator application) installiert.

Fig 2 zeigt auf der linken Seite eine prinzipielle Darstellung eines Vermittlungsknotens SW, der mit einem strukturellen Aufbau SW_HW (für: Switch Hardware), Funktionen MW (für: Middleware) und Anwendungsprogrammen AP1 (für: Application) gegeben ist. Auf der rechten Seite in Fig 2 ist eine prinzipielle Darstellung einer Operatorkonsole OSS dargestellt, die mit einem strukturellen Aufbau PC_HW (für: Personal Computer Hardware), einer Schnittstelle SW-API (für: switch application programming interface) und Anwendungsprogrammen AP2 (für: Application) gegeben ist. Anmeldungsgemäß ist die Operatorkonsole um Anwendungen 3P_AP_PLT (für: third party application platform) ergänzt. Der Vermittlungsknoten steht über ein Netz, wie durch einen dicken Doppelpfeil NW (für: Network) repräsentiert, mit der Operatorkonsole in Wechselbeziehung. Die Anwendungsprogramme AP1 stehen , wie durch einen dünnen Doppelpfeil RPCr&r (für: Remote Procedure Call requests and responses) repräsentiert, mit den Anwendungsprogrammen AP2 in Wechselbeziehung.

Die Software weist mit MW (für: Middleware) bezeichnete Funktionen und mit API's (für: Application Programming Interface) bezeichnete Schnittstellen zum Zugang dieser Funktionen auf. Die anmeldungsgemäße Idee beruht darauf, in externen Plattformen Anwendungen von dritter Seite zu entwickeln und die Middleware im Vermittlungsknoten zu benutzen, um intelligente Funktionen zu realisieren. Die Anwendungen benutzen vordefinierte APIs um Zugang zur Middleware zu erhalten; in einer bevorzugten Ausführungsform ist ausschließlich durch diese APIs ein Zugang zu den Netzdiensten (network services) gegeben. Normalerweise wäre für neue Anwendungen der Aufwand für die Implementierung der dafür erforderlichen Middleware in dem Vermittlungsknoten enorm hoch, da all die Funktionen und Schnittstellen implementiert werden müßten. Die Erfindung macht sich die Erkenntnis zunutze, daß für die Realisierung der Erfindung zum großen Teil ohnehin bereits vorhandene Operatorfunktionen ausgenutzt werden können und der zusätzlich zu erbringende Aufwand gering ist.

Momentan haben fast alle Vermittlungsknoten einschließlich die des Wählvermittlungssystems EWSD (Elektronisches Wählsystem digital, herstellerspezifisch) die Funktionalität einer Operatorkonsole. Bei EWSD ist die Konsole durch einen PC (Personalcomputer) gegeben, der über eine Schnittstelle BA-ISDN (für: Basic Access-Integrated Services Digital Network), die in Fachkreisen auch mit Basic Rate Interface bezeichnet wird, mit dem Vermittlungsknoten verbunden ist. Die mit dem Vermittlungsknoten verbundene Operatorkonsole OSS stellt verschiedene Funktionalitäten bereit, die weiter unter aufgeführt sind. Die Liste offenbart einen großen Umfang von Leistungsmerkmalen, die einem Teilnehmer herkömmlich nicht zur Verfügung stehen.

Anforderung von Operatorleistungen
- Rufanfordern. Ein rufender Teilnehmer kann durch Wahl des LAC/DN (Local Area Code/Directory Number) des Operators die Dienstleistungen des Operators anfordern.
- Qsi (Quasi) automatischer Ruf erlaubt Teilnehmern einer Ortsvermittlung Weitverkehrsverbindungen aufzubauen durch selbst ausgeführte Wahl der DN (Directory Number) für die Dienstleistung und die Nummer des B - Teilnehmers (anzurufender Teilnehmer), obwohl der Ruf zu einem Operator geleitet ist für eine Operator Dienstleistung sowie eine A-Teilnehmeranschlußnummer Identifikation und Überprüfung.
- Übernahme zum Operator. Übernahme des Rufs an den Operator in Fällen, wo die Mithilfe des Operators erforderlich ist z.B. im Falle eines ANI-(Automatc Number Identification) Fehlers.

Rufannahme/Rufpräsentation
- Manuelle Annahme. Operatormaßnahmen erforderlich für die Annahme des Rufes von dem Vermittlungsknoten.
- Automatische Annahme. Operatormaßnahmen sind nicht erforderlich für eine Annahme des Rufes von dem Vermittlungsknoten.
- Automatisches Grüssen. Nachdem ein Ruf zu einem Operator durchgeschaltet wurde, erlaubt das Leistungsmerkmal dem Operator die Grußformel an den rufenden Teilnehmer von einer INDAS (für: Individual Digital Announcement Machine) Aufnahme zu senden anstelle gezwungen zu sein, die Standardformel wörtlich auf jeden Ruf zu wiederholen.

Rufweiterleitung. Rufweiterleitung betrifft die Weiterleitung eines Rufes durch den Operator zu einem anderen Teilnehmer.
- Angeforderte Rufweiterleitung. Angeforderte Rufweiterleitung betrifft die Erstreckung eines Rufes durch den Operator während der rufende A-Teilnehmer mit dem Operator verbunden bleibt.
- Verzögerte Rufweiterleitung.

Aufgeschobene Rufbehandlung: Dieses Leistungsmerkmal erlaubt es dem Operator Rufe z.B. auf Anforderung des Teilnehmers für nachfolgende Behandlung und Plazierung zu einem späteren Zeitpunkt. DCH (Delay Call Handling) bietet folgende Möglichkeiten:
- Buchung eines Rufes
- Suchen für einen gebuchten Ruf
- Veränderung von Details der Buchung
- Den Ruf zu dem vorgesehenen Zeitpunkt durchzuführen oder wenn erforderliche Weiterleitungseinrichtungen verfügbar werden.

Parken eines Rufes: Das Leistungsmerkmal Parken eines Rufes erlaubt einem Operator, der mit einem bestehenden Ruf befaßt ist mit dem Ruf verbunden zu bleiben und trotzdem einen anderen Ruf zu behandeln. Wenn der Operator einen aufgebauten A-Teilnehmer zu Operator zu B-Teilnehmerruf parkt, setzt das System den Ruf in den Haltezustand d.h. beide der A-Teilnehmer und der B-Teilnehmer bleiben verbunden mit ihren wirksam geschalteten Sprechpfaden und nur der Operator ist aus dem Ruf entbunden.

Rufbehandlungseinrichtungen
- Benachrichtigung über die Dauer eines Rufes. Für den Fall, daß es von einem Teilnehmer, der an dem Ruf beteiligt ist, angefordert wird, kann der Operator einen Ruf für Mitteilung kennzeichnen. Das kann eine verbale Operatormitteilung oder eine spezielle Signaltonmitteilung sein.
- Automatische Rufdauerbegrenzung ACDL (für: Automatic Call Duration Limitation). Für den Fall, daß es von einem Teilnehmer, der an einem Ruf teilnimmt angefordert wird, kennzeichnet der Operator den Ruf für ACDL und gibt die Dauer der Zeit ein. Das System speist einen Signalton zu einem von der Administration festgelegten Vorlaufzeit um beide Parteien zu alarmieren, daß das angeforderte Zeitintervall dabei ist abzulaufen. Am Ende des angeforderten Zeitintervalls unterbricht das System den Ruf.
- Simulierte Antwort. Falls das Antwortsignal von der B-Seite des Rufes ausbleibt, obwohl der B-Teilnehmer bereits verbunden ist, kann der Operator das Antwortsignal durch manuelle Maßnahme simulieren.
- Gebührenerfassung. Der Operator kann AMA (für: Automatic Message Accounting) Karten auf einen neuen Stand bringen und die Gebührenerfassungsdauer für wirksam geschaltete Rufe auslösen und/oder beenden. Eine Buchung der Gesprächsgebühren auf das Gebührenkonto eines Dritten ist möglich.
- Lokaler Zugang zur Datenbasis. Der Operator hat Zugang zu der lokalen Datenbasis.
- Rufaufteilung. Die Aufteilungsfunktion erlaubt es dem Operator die Kommunikation mit einem bestimmten Teilnehmer des wirksam geschalteten Rufes zu unterbrechen (entweder den A-Teilnehmer oder den B-Teilnehmer zu unterbrechen). Dabei mag der wirksam geschaltete Ruf eine Dreierkonferenz sein. In diesem Fall wird die Dreierkonferenz aufgeteilt, der bestimmte Teilnehmer wird in die Haltefunktion versetzt und der andere Teilnehmer bleibt mit dem Operator wirksam geschaltet verbunden.
- Überprüfungsfunktionen. Verschiedene Überprüfungsmöglichkeiten sind gegeben. Diese schließen eine Überprüfung der Rufnummer des A-Teilnehmers, eine Überprüfung der Nummer des Gesprächsgebührenkontos (im Fall, daß die Gesprächsgebühren zu Lasten eines Dritten gehen), Überprüfung des Belegtzustandes. Anbieten einer Verbindungsleitung ein. Dies gibt dem Operator die Möglichkeit, den Ruf einem belegten Teilnehmer anzubieten.
- Wiederholungsversuch bei Belegtzustand. Der Operator kann einen erneuten Wahlversuch unternehmen unter Berücksichtigung eines Belegt-Zustandes eines Kanalbündels durch Lösen der Verbindung und erneutem Aufbau der Verbindung.

Grafische Anzeige/Darstellung von Verkehrs- und Leistungsfähigkeits-Statistiken und Berichten.Verschiedene Leistungsfähigkeits-Berichte sind verfügbar.

Anmeldungsgemäß ist für eine Teilnehmereinrichtung ein Zugang zu dem Vermittlungsknoten und den Netzwerkressourcen gegeben.

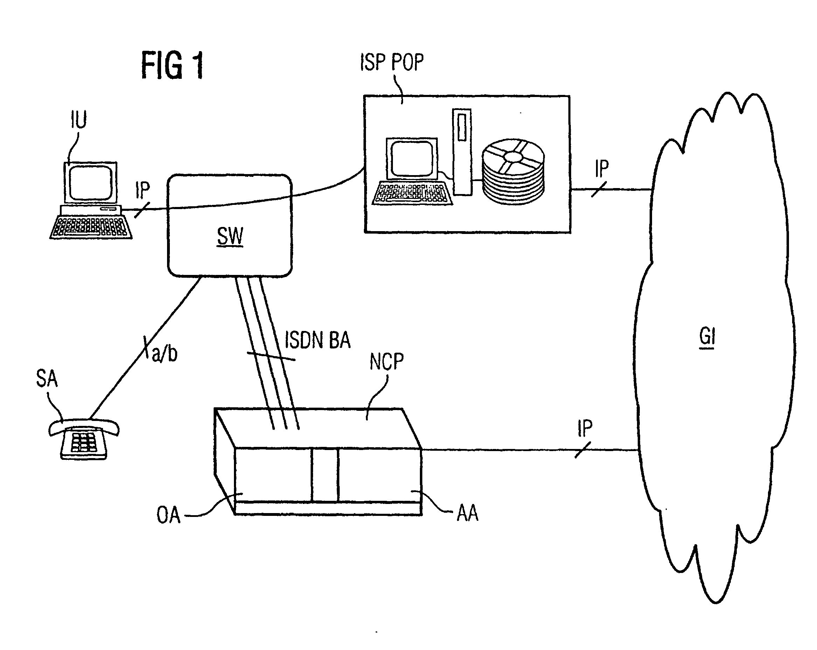

Fig 1 zeigt einen Internet-Benutzer IU (für: Internet-User), der über den Vermittlungsknoten SW eine Verbindung zu seinem Internet-Provider ISP POP nach dem Internet-Protokoll IP aufgebaut hat. Der Internet-Provider hat eine Verbindung zu dem Internet GI (für: Global Internet). Die Bedienerkonsole NCP, die um zusätzliche Anwendungen ergänzt ist, weist eine unmittelbare Verbindung zum Internet auf. Ein Service-Agenten SA ist über eine Zweidrahtleitung a/b mit dem Vermittlungsknoten verbunden.

Die der Anmeldung zugrunde liegende Idee beruht auf der Verwendung der vorhandenen Schnittstelle zwischen dem OSS und dem Vermittlungsknoten um das Wählvermittlungsnetz PSTN und das Internet zu verbinden. Insbesondere, Verwendung der in dem Vermittlungsknoten implementierten Software für den OSS als Middleware und Ermöglichung des Zugangs zu dieser Middleware von dritter Seite Anwendungen, die auf externen Plattformen angeordnet sind. Dies ermöglicht es, dem Internet die Ressourcen und die Intelligenz in dem PSTN Netzwerk zu nutzen und ermöglicht es Leistungsmerkmale zu entwickeln, die eine Zusammenarbeit zwischen dem PSTN und dem Internet Netzwerk erfordern.

Zugang zu der Middle Ware in dem Vermittlungsknoten.

Der Patentanmeldung liegt die Idee zugrunde, die OSS Software auf eine Windows NT Plattform zu übertragen (portieren) und Anwendungen, die die herkömmlichen Operatorfunktionen automatisch ausführen, hinzuzufügen. Zusätzlich mögen neue Anwendungen hinzugefügt werden, die als Proxy Agent zwischen dem Internet und dem PSTN Netzwerk funktionieren. Die Verbindung zwischen der Operatorkonsole als Proxy und dem Internet möge beispielsweise eine Übertragungsrate von 64 kbit/s aufweisen. Eine herkömmliche Operatorkonsole OSS, die um die anmeldungsgemäßen Merkmale ergänzt ist, wird mit NCP (Network Control Platform) bezeichnet. Die wesentlichen Funktionen einer OSS Plattform, von denen eine NCP Plattform Gebrauch macht, sind
- Rufweiterleitung
- Anbieten einer Verbindungsleitung für einen aktiven Teilnehmer
- Aktualisierung der Verbindungsentgeltinformation
- Wiederholung im Besetztfall
- Verzögerte Rufumleitung.

Der NCP benutzt die vorhandene Basic Access Schnittstelle zu dem Vermittlungsknoten und hat eine TCP/IP (Transmission Control Protokoll/Internet Protokoll; ein vom US - Verteidigungsministerium festgelegtes Kommunikationsprotokoll für Verbindungen und Datenaustausch in unterschiedlichen Rechnernetzen) Verbindung zu dem Internet. Der zusätzliche Aufwand für den Vermittlungsknoten ist gering, da fast alle benötigten Funktionen bereits implementiert sind. Eine Kommunikation einer Anwendung von dritter Seite möge dadurch erfolgen, daß vordefinierte API benutzt werden und ein Zugang zu allen Ressourcen in dem Vermittlungsknoten gegeben sind.

Die Anwendung der vorliegenden Erfindung auf die oben beschriebenen Merkmale ermöglicht Internet-Leistungsmerkmale, die bislang nur mit hohem Aufwand möglich waren. Im folgenden sind Beispiele für mögliche Leistungsmerkmale gegeben.

Gemäß einer ersten Ausführungsform erfolgt ein Umschalten zwischen einer Internet-Sitzung und Annahme einer ankommenden Gesprächsverbindung. Wenn ein ankommender Ruf kommt, während ein Teilnehmer in dem Internet surft, erhält der Teilnehmer eine Einblendung (POP - Up - Message) in seinem Internet - Navigationssystem (in seiner Bildschirmoberfläche für das Internet, Browser) um ihm den Ruf zu signalisieren und ihm die Möglichkeit zu geben, die Internet-Sitzung zu unterbrechen und den ankommenden Ruf anzunehmen. Die Einblendung enthält/besteht aus der Teilnehmernummer des rufenden Teilnehmers. Das Leistungsmerkmal möge wie folgt funktionieren;

Die Network Control Platform NCP hat die folgenden Anwendungen:
- Informationsaufzeichnungsanwendung: zeichnet auf, daß der Teilnehmer mit dem Internet beschäftigt ist und speichert die IP (Internet Protokoll)-Adresse und die E164-Adresse des Benutzers.
- PSTN-Proxy-Rufanwendung: handelt als Proxy-Agent zwischen dem Internetteilnehmer und dem PSTN-Netzwerk, um die rufbezogenen Funktionen auszuführen.

- Der Internet-Teilnehmer wählt die Nummer, die wie normal eine Verbindung zu seinem ISP POP (Internet Service Provider Point of Presence) herstellt
- Der Internet-Benutzer baut über den ISP POP eine TCP/IP-Verbindung niedriger Bandbreite zur NCP: Informationsaufzeichnungsanwendung auf und informiert die NCP, daß er mit dem Internet beschäftigt ist und stellt die eigene IP und E 124 zur Verfügung. Diese NCP-Verbindung wird aufrecht gehalten und wird benutzt, um mit dem Internet-Benutzer für einen Datenauszutausch zu kommunizieren.
- Der Benutzer surft WWW (World Wide Web) Seiten, wie normal
- Ein externer Teilnehmer versucht den Internet-Benutzer anzurufen. Die Vermittlungseinrichtung (Switch) findet durch Vergleich der Nummer des angerufenen Teilnehmers mit den ISP (Internet Service Provider) -Nummern heraus, daß der Teilnehmer mit dem Internet beschäftigt ist und führt den externen Teilnehmer zu der NCP: PSTN-Proxy-Rufanwendung
- Die NCP: PSTN-Proxy-Rufanwendung spielt dem externen Teilnehmer eine Mitteilung zu, daß versucht wird, den Ruf zu einem mit dem Internet beschäftigen Teilnehmer zu führen und daß es länger dauern kann als normal. Dies geschieht zu dem Zweck, damit der externe Teilnehmer den Rufversuch nicht abbricht, weil er annimmt, daß niemand den Ruf annimmt.
- Die NCP: PSTN-Proxy-Rufanwendung erstellt ein IP-Paket und sendet es über das Internet zu dem Teilnehmer. Das gesendete IP-Paket enthält die Nummer des rufenden Teilnehmers. Eine Verbindung in das Internet - Navigationssystem (Browser) des gerufenen Teilnehmers löst eine Einblendung eines Menüs aus und zeigt die Nummer des anrufenden Teilnehmers an und bietet dem Teilnehmer eine Taste (button) an, um den Ruf anzunehmen oder nicht.
- Wenn der Teilnehmer die Taste drückt, um den Ruf anzunehmen, dann wird eine Information darüber zu dem NCP übertragen. Die NCP: PSTN-Proxy-Rufanwendung wird den Ruf rekonfigurieren. Darauffolgend löst die NCP: PSTN-Proxy-Rufanwendung den Internet- Benutzer von dem ISP POP (Internet Service Provider Point of Presence) aus und bewirkt über die Schnittstelle ISDN - BA eine Verbindung zwischen dem externen Teilnehmer und dem Internet-Benutzer. Sobald das Modem ausgelöst ist, läutet das Telefon bei dem Internet-Benutzer und - wenn der Benutzer den Ruf annimmt - wird ein normaler Ruf aufgebaut.
- Der NCP zieht sich vollständig aus dem Ruf zurück, d. h. es ist keine Verbindungssignalisierung oder Trägerverbindung (bearer connection) zu dem Internet-Benutzer mehr gegeben. Falls der Teilnehmer wieder eine Verbindung zum Internet wünscht, muß er von Anfang an beginnen.

Eine zweiten Ausführungsform ist durch eine fortgeschrittene Nachrichten-Warteanzeige gegeben. Ein Teilnehmer kann eine Anfrage abgeben, so daß er informiert wird, wenn eine E - mail (im elektronischen Datenformat versandter Brief) von einem bestimmten Absender oder mit einem bestimmten Betreff empfangen wird. Der Teilnehmer kann mittels eines speziellen Tones bei Annahme des Telefongespräches oder mit einer Ankündigung angeklingelt werden, daß eine E - mail wartet, oder, falls der Personalcomputer so eingerichtet ist, das Teilnehmer-Email-Programm zu starten, um dann die E - mail hereinzuladen (download). Hierzu sei angemerkt, daß der Teilnehmer irgendwo sein kann, um informiert zu werden, beispielsweise auf einer Geschäftsreise. Das Leistungsmerkmal funktioniert wie folgt.
Der NCP hat die folgenden Anwendungen:
- PSTN-Proxy-Rufanwendung: Handelt als Proxy-Agent zwischen dem Internet-Benutzer und dem PSTN-Netzwerk, um die rufbezogenen Funktionen auszuführen.
- E - mail-Signalisierungsanwendung: Auf Anforderung des Teilnehmers überwacht diese Anwendung die E - mail des Teilnehmers und kann zusätzliche Anwendungen im dem NCP anstoßen, wenn sie E - mail von einem besonderen Teilnehmer oder mit einem besonderen Inhalt auffindet.

- Durch das Internet gibt der Teilnehmer eine Anfrage an die NCP: E - mail-Signalisierungsanwendung ab, um ihn zu informieren, wenn eine E - mail von einem besonderen Teilnehmer oder mit einem besonderen Inhalt empfangen wird. Der Teilnehmer kann auch festlegen, wie oft die E - mail abgefragt wird.
- Die NCP: Email-Signalisierungsanwendung überwacht die E - mail des Teilnehmers. Wenn eine E - mail mit einem besonderen Unterscheidungsmerkmal empfangen wird, wird die NCP: PSTN-Proxy-Rufanwendung in Gang gesetzt.
- Die NCP: PSTN-Proxy-Rufanwendung informiert über die Schnittstelle ISDN-BA den Vermittlungsknoten (Switch), so daß er dem Teilnehmer einen bestimmten Ton liefert, wenn er den Anruf annimmt oder die NCP: PSTN-Proxy-Rufanwendung kann dem Teilnehmer eine Mitteilung geben, daß eine E - mail wartet. Es sei angemerkt, daß es ebenso möglich ist, eine Mitteilung an einen Pager (mobiles Empfangsgerät, das über Funk empfangene alpha-numerische Zeichen wiedergibt) zu senden, der einen Hinweis auf eine wartende E - mail gibt oder sogar die E - mail zu dem Pager oder einer mobilen Kommunikationseinrichtung, wie z. B. einem Handy zu senden.

Eine dritte Ausführungsform ist durch Schalten zwischen der Benutzung eines Internet-Navigationsprogramms (Browsing WWW Pages) und Sprechen mit einem realen Operator, der nicht mit dem Internet verbunden ist, gegeben. Wenn ein Benutzer im Internet surft, kann er einen HTML-(Hypertext Markup Language) Eintrag "Sprechen mit Operator" anklicken. Dies führt dazu, daß die Internet-Sitzung unterbrochen wird und der Teilnehmer über den ISP POP (Internet Service Provider Point of Presence), das Internet GI , die NCP (Network Control Platform), die Schnittstelle ISDN-BA und den Vermittlungsknoten (switch) mit einem Service-Agenten SA verbunden wird. Für den Fall, daß der Service-Agent beschäftigt ist, ist es möglich, daß die NCP (Network Control Platform) über die Schnittstelle ISDN-BA informiert wird, wenn der Service-Agent frei wird. Dabei wird die Verbindung zum Internet nur unterbrochen, wenn der Service-Agent verfügbar ist.

Eine vierte Ausführungsform ist durch eine Abfrage persönlicher Nachrichten von dem Anrufbeantworter über Internet gegeben. Ein Teilnehmer, der beispielsweise im Urlaub oder auf Geschäftsreise ist, kann Nachrichten von seinem Anrufbeantworter zu Hause über das Internet abfragen. Die Nachrichten mögen als Audio - Signalstrom über das Internet übertragen werden. Es sei angemerkt, daß hierbei die Sprachqualität gut ist, nachdem dies nicht im Echtzeitbetrieb erfolgen muß.

## Patentansprüche

1. Anordnung zur Verbindung eines Wählvermittlungsnetzes mit dem Internet (GI), bei der
- das Wählvermittlungsnetz einen Vermittlungsknoten (SW) aufweist
- der Vermittlungsknoten über eine Schnittstelle mit einer Bedienerkonsole (OSS) verbunden ist,
**dadurch gekennzeichnet,**
**dass** das Internet über die Bedienerkonsole (OSS, NCP) und die Schnittstelle mit dem Vermittlungsknoten verbindbar ist.

2. Anordnung nach Anspruch 1,
**dadurch gekennzeichnet,**
**dass** die in der Bedienerkonsole implementierten Operatorfunktionen (OA) ansteuerbar ausgeführt sind.

3. Anordnung nach einem der vorstehenden Ansprüche,
**dadurch gekennzeichnet,**
**dass** die Bedienerkonsole durch eine Plattform gegeben ist, die mit einem unter der Handelsbezeichnung Windows NT betriebenen Betriebssystem betreibbar ist.

4. Bedienerkonsole (OSS, NCP) zur Verbindung eines Wählvermittlungsnetz mit dem Internet (GI),
**dadurch gekennzeichnet,**
**dass** die in der Bedienerkonsole implementierten Operatorfunktionen (OA) über eine Verbindung zum Internet ansteuerbar ausgeführt sind.

5. Bedienerkonsole nach Anspruch 4,
**gekennzeichnet durch**
eine herkömmliche Schnittstelle zur Verbindung mit einem Vermittlungsknoten (SW) und einen Anschluss zur Verbindung mit dem Internet.

6. Bedienerkonsole nach Anspruch 4 oder Anspruch 5,
**gekennzeichnet durch**
eine Anwendung, die ein selbsttätiges Ausführen einer Operatorfunktion bewirkt.

7. Bedienerkonsole nach einem der Ansprüche 4, 5 oder 6,
**gekennzeichnet durch**
eine Anwendung, die als Proxi-Agent zwischen Wählvermit.tlungsnetz und Internet wirkt.

8. Verfahren zum Zugriff auf Ressourcen in einem Vermittlungsknoten (SW) eines Wählvermittlungssystems durch das Internet (GI) bei dem eine Bedienkonsole (OSS) einerseits mit dem Vermittlungsknoten und andererseits mit dem Internet verbunden ist demzufolge der Zugriff einer Internet -bezogenen Anwendung über eine API (application programming interface) - Schnittstelle, die für den Zugriff einer Operator- Anwendung auf eine Ressource des Vermittlungsknotens vorgesehen ist, erfolgt.

## Claims

1. Arrangement for connecting a switched network to the Internet (GI), in which
- the switched network has a switching node (SW),
- the switching node is connected to a control desk (OSS) via an interface,
**characterized**
**in that** the Internet can be connected to the switching node via the control desk (OSS, NCP) and the interface.

2. Arrangement according to Claim 1,
**characterized**
**in that** the operator functions (OA) implemented in the control desk are in actuatable form.

3. Arrangement according to one of the preceding claims,
**characterized**
**in that** the control desk is provided by a platform which can be operated using an operating system operated under the commercial name Windows NT.

4. Control desk (OSS, NCP) for connecting a switched network to the Internet (GI),
**characterized**
**in that** the operator functions (OA) implemented in the control desk are designed such that they can be actuated via a connection to the Internet.

5. Control desk according to Claim 4,
**characterized by**
a conventional interface for connection to a switching node (SW), and a connection for connection to the Internet.

6. Control desk according to Claim 4 or Claim 5,
**characterized by**
an application which prompts autonomous execution of an operator function.

7. Control desk according to one of Claims 4, 5 or 6,
**characterized by**
an application which acts as a proxy agent between the switched network and the Internet.

8. Method for accessing resources in a switching node (SW) in a switched system using the Internet (GI), in which a control desk (OSS) is connected firstly to the switching node and secondly to the Internet, as a result of which an Internet-based application effects access using an API (application programming interface) interface which is provided in order for an operator application to access a resource in the switching node.

## Revendications

1. Dispositif destiné à relier un réseau de commutation automatique à l'Internet (GI) dans lequel
- le réseau de commutation automatique comporte un nodal de commutation (SW)
- le nodal de commutation est relié, par l'intermédiaire d'une interface avec une console de commande (OSS),
**caractérisé par le fait**
**que** l'Internet peut être relié au nodal de commutation à travers la console de commande (OSS, NCP) et l'interface.

2. Dispositif selon la revendication 1
**caractérisé par le fait**
**que** les fonctions d'opérateur (OA) implémentées dans la console de commande sont conçues de telle sorte qu'elles peuvent être sollicitées.

3. Dispositif selon l'une des revendications précédentes
**caractérisé par le fait**
**que** la console de commands est donnée par une plate-forme qui peut être exploitée avec un système d'exploitation connu sous la désignation commerciale Windows NT.

4. Console de commands (OSS, NCP) destinée à relier un réseau de commutation automatique à l'Internet (GI)
**caractérisé par le fait**
**que** les fonctions d'opérateur (OA) implémentées dans la console de commande sont conçues de telle sorte qu'elles peuvent être sollicitées via une liaison vers l'Internet.

5. Console de commands selon la revendication 4
**caractérisé par**
une interface conventionnelle destinée à la liaison avec un nodal de commutation (SW) et un raccordement destiné à la liaison avec l'Internet.

6. Console de commande selon la revendication 4 ou la revendication 5
**caractérisé par**
une application qui déclenche l'exécution automatique d'une fonction d'opérateur.

7. Console de commande selon l'une des revendications 4, 5 ou 6
**caractérisé par**
une application qui agit comme agent proxy entre le réseau de commutation automatique et l'Internet.

8. Procédé destiné à permettre l'accès, par l'Internet (GI), à des ressources d'un nodal de commutation (SW) dans un système de commutation automatique et dans lequel une console de commande (OSS) est reliée, d'un côté, avec le nodal de commutation et, d'un autre côté, avec l'Internet et, par conséquent, l'accès à une application relative à l'Internet se fait via une interface API (application programming interface) qui est prévue pour l'accès d'une application d'opérateur à une ressource du nodal de commutation.
